# EUROPEAN PATENT APPLICATION

(11) **EP 4 624 157 A1**
(43) Date of publication of application: **01.10.2025**
(21) Application number: 25162138.9
(22) Date of filing: 06.03.2025
(51) Int. Cl.: B32B 37/15, B05C 5/02, B29C 48/08, B29C 48/154, B05D 1/26

(54) **LAMINATION SYSTEM WITH A GAS DISTRIBUTION DEVICE**

(30) Priority: 28.03.2024 EP 24167231
(71) Applicant: Tetra Laval Holdings & Finance S.A., 1009 Pully (CH)
(72) Inventor: MACLENNAN, Lars, 221 86 Lund (SE); ENGVALL, Per, 221 86 Lund (SE); BILLING, Tobias, 221 86 Lund (SE); ANDERSSON, Per, 221 86 Lund (SE); SANDELIN, Filip, 221 86 Lund (SE); POPOVICS, Istvan, 221 86 Lund (SE)
(74) Representative: Tetra Pak Patent Attorneys

(57) **Abstract**

The present invention relates to a lamination system configured to produce a laminated packaging material. The lamination system comprising: an impression roller and a counter roller together forming a press nip; and an extruder. The lamination system is configured to feed a web of a core material layer into the press nip. The extruder is configured to provide a film of thermoplastic onto the web of core material layer as facing one of the impression roller or the counter roller. The lamination system further comprising a gas distribution device configured to distribute a flow of gas onto a surface of the film before the film enters the press nip. The gas distribution device comprising: an outer tube having a longitudinal extension and having a plurality of gas distribution holes distributed along the longitudinal extension; and an inner tube being rotationally arranged within the outer tube at a first end portion of the outer tube. The inner tube comprising a plurality of regulation holes distributed along the longitudinal extension. Each regulation hole has a different elongation in a direction perpendicular to the longitudinal extension, wherein an elongation of the regulation holes is increasing as seen from an outer end of the first end portion of the outer tube. The plurality of regulation holes overlap with at least a subset of the plurality of gas distribution holes.

## Description

### Technical field

The present invention relates to a lamination system configured to produce a laminated packaging material, especially a lamination system comprising a gas distribution device configured to distribute a flow of gas onto a surface of a film of thermoplastic before the film is laminated to other layers of the laminated packaging material, such as a web of a core material layer, at a press nip of the lamination system.

### Background of the invention

In order to improve a sealing bond between a film of thermoplastic and other layers, e.g. a paperboard web, of a laminated packaging material in a lamination system for producing a laminated packaging material it has been found, see e.g. WO9962708A1, WO9950066A1, WO0185565A1, and WO0125005A1, that ozone can be used to activate and/or generate bonding seats or sites in the surface of the thermoplastic film so that the thermoplastic is sealed to the web or other layers of the laminated packaging material with high sealing strength.

Ozone is a powerful oxidant and may hence induce problems with corrosion of devices in the lamination system. Further, the high oxidizing potential of ozone may also cause damage mucous and respiratory tissues. Hence, while using ozone for the beneficial purpose of activating and/or generating bonding seats or sites in the surface of the thermoplastic film it is to be safeguarded that the ozone used in the lamination system is distributed only where it is needed. This is especially important for a lamination system configured to produce laminated packaging material of different widths, e.g. widths of laminated packaging material in the range of 120 cm to 170 cm. Hence, upon changing the width of the laminated packaging material to be produced by the lamination system the distribution of ozone preferable is to be changed so that ozone is distributed along the full width of the laminated packaging material but not beyond. Hence, there is a need in providing a lamination system with a gas distribution device that can fulfill this.

### Summary of the invention

The herein disclosed technology seeks to at least partly mitigate, alleviate or eliminate one or more of the above-mentioned deficiencies and disadvantages in the prior art. In particular, it is an object to provide a lamination system in which the distribution of gas, especially gas comprising ozone, can be controlled. Particularly, the flow of gas along a longitudinal axis of the gas distribution device may be regulated depending on a width of laminated packaging material produced in a lamination system. This is particularly useful in a lamination system being configured to produce laminated packaging material of different widths.

The inventors of the present inventive concept have realized a new and improved way of changing a width of a gas curtain in a lamination system configured to produce laminated packaging material.

Various aspects and embodiments of the disclosed invention are defined below and in the accompanying independent and dependent claims.

According to a first aspect a lamination system configured to produce a laminated packaging material is provided. The lamination system comprising an impression roller and a counter roller together forming a press nip; and an extruder. The lamination system is configured to feed a web of core material layer into the press nip. The extruder is configured to provide a film of thermoplastic onto the web of the core material layer. The lamination system further comprises a gas distribution device configured to distribute a flow of gas onto a surface of the film before the film enters the press nip. The gas distribution device comprising an outer tube and an inner tube. The outer tube having a longitudinal extension parallel with a rotational axis of the impression roller and the counter roller. The outer tube having a plurality of gas distribution holes distributed along the longitudinal extension. The inner tube being rotationally arranged within the outer tube at a first end portion of the outer tube. The inner tube comprising a plurality of regulation holes distributed along the longitudinal extension. Each regulation hole has a different elongation in a direction perpendicular to the longitudinal extension. An elongation of the regulation holes is increasing as seen from an outer end of the first end portion of the outer tube. The plurality of regulation holes overlap with at least a subset of the plurality of gas distribution holes.

The gas distribution device may be more than one, for instance two, and may be located as such to provide the gas on both sides of the thermoplastic extruded film.

The outer end of the first end portion of the outer tube may be understood as the far most end located on the corresponding side of the lamination system. That may be the end where the gas is provided to the distribution system; and/or other end of the outer tube compared to the end of the outer tube where the gas is provided to the distribution system.

The lamination system allow for changing a width of a gas curtain within the lamination system. This since by rotation of the inner tube with respect to the outer tube more and more of the gas distribution holes will be closed off due to the difference in elongation of the regulation holes. Hence, upon the inner tube is rotated relative to the outer tube overlaps in the rotational direction between the gas regulation holes of the inner tube and gas distribution holes of the outer tube may be regulated. This provide for a simple but yet effective way of regulating the width of the gas curtain provided by the gas distribution device. The regulation of the width of the gas curtain may be made on the fly by controlling the rotation of the inner tube in relation to the outer tube. For example, the regulation of the width of the gas curtain may be based on a width of the laminated packaging material to be produced by the lamination system. By adopting/regulating the width of the gas curtain provided by the gas distribution device to correspond to the width of the laminated packaging material to be produced by the lamination system it may be safeguarded that e.g. ozone treatment is only applied to the surface of the film of thermoplastic. This may prolong the lifetime of the lamination system since direct exposure of ozone to portions of the lamination system may be avoided.

The plurality of gas distribution holes are preferably evenly distributed along the longitudinal extension. Such distribution of the gas distribution holes allow for an uniformly distribution of gas, e.g. gas comprising ozone, to a surface of layer of a film of laminated packaging material in the process of laminating the laminated packaging material. The plurality of regulation holes are preferably evenly distributed along the longitudinal extension. The regulation holes preferably have a same inter-hole distance along the longitudinal direction as an inter-hole distance of the gas distribution holes.

The plurality of gas distribution holes are preferably arranged along a straight line parallel with the longitudinal extension.

The plurality of regulation holes are preferably overlapping along a straight line parallel with the longitudinal extension. Especially, a short side edge of each of the plurality of regulation holes may be overlapping with each other along a straight line parallel with the longitudinal extension.

The gas distribution device may further comprises a gas supply configured to supply gas in the form of air comprising 1-5 wt% of ozone, preferably 3 wt% of ozone. The gas is preferably supplied to the inner tube for distribution out from the gas distribution holes of the outer tube to form a gas curtain.

The inner tube may comprises a coating on an outer surface thereof facing an inner surface of the outer tube. The coating preferably have a relatively low friction coefficient. Such coating is applied in order to facilitate rotation of the inner tube within the outer tube.

The gas distribution device may further comprises a control circuity configured to control rotation of the inner tube. As mentioned above, such control may be based on a width of the laminated packaging material to be produced by the lamination system.

A diameter of the plurality of gas distribution holes may be in a range of 0.5 mm to 1.0 mm, preferably in a range of 0.75 to 0.9 mm. A width of the plurality of regulation holes may be in a range of 2 mm to 5 mm. Hence, the width of the regulation holes is substantially larger than the diameter of the gas distribution holes. This allow for some tolerance in aligning the regulation holes and the gas distribution holes in the longitudinal direction.

The inter-hole distance, center-to-center, of the plurality of gas distribution holes may be in a range of 10 and 20 mm.

A distance between the two outermost gas distribution holes among the plurality of gas distribution holes may be in a range of 160 cm to 180 cm.

A distance between the two outermost regulation holes among the plurality of regulation holes may be in a range of 20 cm to 30 cm. Hence, the gas distribution device may be controlled so that the gas curtain has a width in a range of 120 and 170 cm under the assumption that the distance between the two outermost gas distribution holes is about 170 cm, the distance between the two outermost regulation holes is 25 cm and that there is one inner tube at each end of the outer tube.

The gas distribution device may further comprises a further inner tube being rotationally arranged within the outer tube at a second end portion, opposite to the first end portion, of the outer tube. The further inner tube comprises a plurality of regulation holes distributed along the longitudinal extension, wherein each regulation hole has a different elongation in a direction perpendicular to the longitudinal extension, wherein an elongation of the regulation holes is increasing as seen from an outer end of the second end portion of the outer tube, and wherein the plurality of regulation holes overlap with at least a subset of the plurality of gas distribution holes.

The outer end of the second end portion of the outer tube may be understood as the far most end located on the corresponding side of the lamination system. That may be the end where the gas is provided to the distribution system; and/or other end of the outer tube compared to the end of the outer tube where the gas is provided to the distribution system.

The further inner tube may further comprises one or more of the features as defined for the inner tube arranged at the first end of the outer tube.

According to a second aspect a gas distribution device is provided. The gas distribution device comprising an outer tube and an inner tube. The outer tube having a longitudinal extension and having a plurality of gas distribution holes distributed along the longitudinal extension. The inner tube being rotationally arranged within the outer tube at a first end portion of the outer tube, the inner tube comprising a plurality of regulation holes distributed along the longitudinal extension, wherein each regulation hole has a different elongation in a direction perpendicular to the longitudinal extension, wherein an elongation of the regulation holes is increasing as seen from an outer end of the first end portion of the outer tube, and wherein the plurality of regulation holes overlap with at least a subset of the plurality of gas distribution holes.

The features of the gas distribution device discussed above in connection with the lamination system according to the first aspect, when applicable, apply to this second aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Fig. 1 schematically illustrates a lamination system configured to produce a laminated packaging material, the lamination system comprising a gas distribution device used for supplying gas to a surface of a thermoplastic film before it is sealed to a web of a core material layer.
Fig. 2 is an exploded view of the gas distribution device in which an outer tube and an inner tube of the gas distribution device are illustrated in a disassembled state of the gas distribution device.
Fig. 3 is a cross sectional view of a portion of the gas distribution device in an assembled state in which the inner tube is arranged within the outer tube.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It will also be appreciated that when the present disclosure is described in terms of a method, it may also be embodied in an apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors.

It is also to be understood that the terminology used herein is for the purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

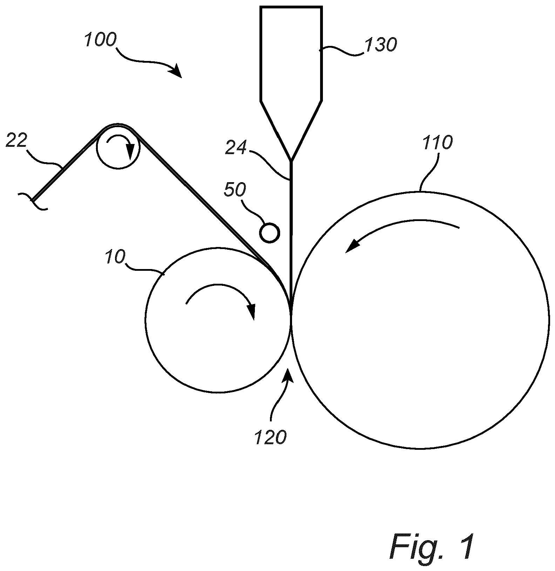

Fig. 1 schematically illustrates lamination system 100 configured to produce a laminated packaging material. The lamination systems 100 is capable of producing a laminated packaging material, at least to some extent. Hence, the lamination system 100 is configured to perform only certain specific processes of the entire converting procedure, i.e. to convert a web 22 core material layer to a laminate packaging material. The core material typically is formed of paperboard.

The lamination system 100 comprises an impression roller 10 and a counter roller 110 together forming a press nip 120. The lamination system 100 is configured to feed a web 22 of core material layer into the press nip 120. Typically this is archived such that that the web 22 of core material layer is facing the impression roller 10 rather than the counter roller 110.

The lamination system 100 further comprises an extruder 130. The extruder 130 is configured to provide a continuous melt film 24 into the press nip 120. The continuous melt film 24 typically is a film 24 of thermoplastic. A further barrier layer, such as an aluminum foil (not shown), intended to provide gas barrier properties to the laminate packaging material, may be fed into the press nip 120 and laminated to the web 22 of core material layer, while extruding the continuous melt film 24, i.e. the film 24 of molten laminate thermoplastic therebetween, thus bonding the core material layer and the aluminum foil layer together.

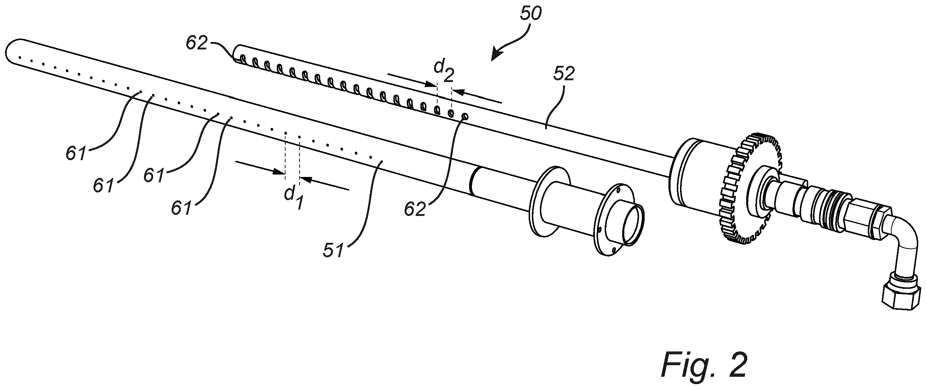

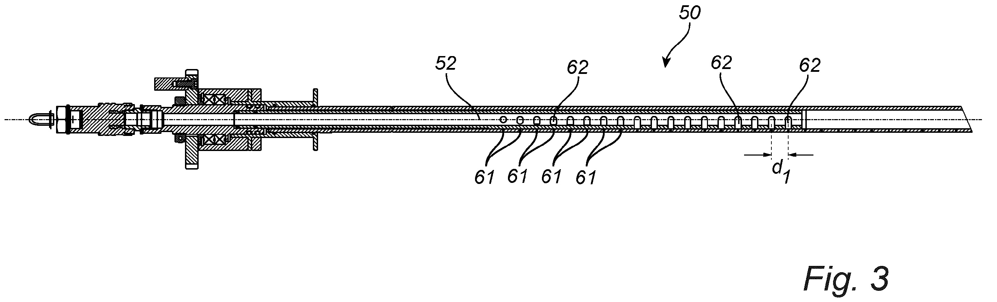

The lamination system 100 further comprising a gas distribution device 50 configured to distribute a flow of gas onto one or both surfaces of the film 24 before the film 24 enters the press nip 120. The gas distribution device 50 will be discussed in more detail below in connection with Figs 2 and 3. Typically, the flow of gas comprises air having 1-5 wt% of ozone, preferably 3 wt%, added thereto. In order to improve a sealing bond between the film 24 of thermoplastic and the web 22 of core material layer, the first thermoplastic layer is preferably extruded during the supply of ozone which activates and/or generates bonding seats or sites in the surface of the thermoplastic so that the thermoplastic is sealed to the web 22 of core material layer with high sealing strength. Preferably, at least the surface of the film 24 which is directed towards the surface of the web 22 of core material layer, is being exposed to ozone treatment. However, in some applications both sides of the film 24 is being exposed to ozone treatment. In the latter case, the lamination system 100 comprises two gas distribution devices 50, one on each side of the film 24.

The co-extruded and still hot, molten film 24 is thereafter fed together with the web 22 of core material layer through the press nip 120 and thus being brought to adhere by means of pressure and the heat from the thermoplastic.

The gas distribution device 50 will now be discussed in more detail in connection with Figs 2 and 3. The gas distribution device 50 comprises an outer tube 51 and one or two inner tubes 52. Preferably, both the outer tube 51 and the one or two inner tubes 52 are circular tubes. Both the outer tube 51 and the one or two inner tubes 52 have a linear longitudinal extension. Each of the one or two inner tubes 52 are rotationally arranged within the outer tube 51 at a respective end portion of the outer tube 51. The gas distribution device 50 may comprise a control circuity configured to control rotation of the one or two inner tubes 52. The rotation of the one or two inner tubes 52 may be governed by operation of an electrical motor operating on a gear arranged to the respective inner tube 52. As will be discussed in more detail below, the rotation of the one or two inner tubes 52 may be controlled based on a width of the laminated packaging material to be produced by the lamination system 100. The gas distribution device 50 may further comprise a gas supply. The gas supply being configured to supply gas in the form of air comprising 1-5 wt% of ozone, preferably 3 wt% of ozone. The gas is supplied to the one or two inner tubes 52. The end of each of the one or two inner tubes 52 which is inserted into the outer tube 51 is open such that gas freely flow along the longitudinal extension of the outer tube not being provided with an inner tube 52. Hence, the gas is supplied to the outer tube 51 via the one or two inner tubes 52.

The outer tube 51 has a longitudinal extension. Upon the gas distribution device 50 being arranged in the lamination system 100 the longitudinal extension of the outer tube 51 is parallel with a rotational axis of the impression roller 10 and the counter roller 110. The outer tube 51 further has a plurality of gas distribution holes 61 distributed along the longitudinal extension. The plurality of gas distribution holes 61 are preferably evenly distributed along the longitudinal extension. Moreover, the plurality of gas distribution holes 61, especially a center of the gas distribution holes 61, are typically arranged along a straight line parallel with the longitudinal extension. A center-to-center distance, d₁, between two neighboring holes among the plurality of gas distribution holes 61 is typically in a range of 10 and 20 mm. According to one particular example, the center-to-center distance, d₁, between two neighboring holes among the plurality of gas distribution holes 61 is set to be 14 mm. A distance between the two outermost gas distribution holes 61 among the plurality of gas distribution holes 61 may be in a range of 160 cm to 180 cm. According to one particular example, the distance between the two outermost gas distribution holes 61 among the plurality of gas distribution holes 61 is about 170 cm. The plurality of gas distribution holes 61 are typically circular holes with a diameter in a range of 0.5 mm to 1.0 mm, preferably in a range of 0.75 to 0.9 mm. Not all holes of the plurality of gas distribution holes 61 need to have a same diameter. For example, the holes arranged at a center of the outer tube 51 may have a smaller diameter than the hole at the end portions of the outer tube 51.

Each of the one or two inner tubes 52 has a longitudinal extension. Upon the gas distribution device 50 being assembled the longitudinal extension(s) of the one or two inner tubes 52 is/are parallel with the longitudinal extension of the outer tube 51. As mentioned above, the one or two inner tubes 52 is/are rotationally arranged within the outer tube 51. Both the outer tube 51 and the one or two inner tubes 52 are preferably circular tubes. An outer diameter of each of the one or two inner tubes 52 correspond with an inner diameter of the outer tube 51. This so that a close fit between the one or two inner tubes 52 and the outer tube 51 is provided. In order to facilitate rotation of the one or two inner tubes 52 within the outer tube an outer surface of the one or two inner tubes 52 may be coated. The coating may be a PFAS, e.g. Teflon^{®}. Alternatively, another coating material having a friction coefficient close to PFAS may be used.

Each of the one or two inner tubes 52 comprises a plurality of regulation holes 62 distributed along the longitudinal extension. Preferably, the plurality of regulation holes 62 are evenly distributed along the longitudinal extension. Each regulation hole 62 has a different elongation in a direction perpendicular to the longitudinal extension. Especially, an elongation of the regulation holes 62 is increasing as seen from an outer end of the end portion of the outer tube 51 at which the inner tube 52 is arranged. Further, the plurality of regulation holes 62 overlap with at least a subset of the plurality of gas distribution holes 61. Preferably, the regulation holes 62 have a same inter-hole distance d₂ center-to-center, along the longitudinal direction as an inter-hole distance d₁, center-to-center, of the gas distribution holes 61. Moreover, the plurality of regulation holes 62 are overlapping along a straight line parallel with the longitudinal extension. Especially, a short side edge of each of the plurality of regulation holes may be overlapping with each other along a straight line parallel with the longitudinal extension. Furthermore, a width along the longitudinal direction of each of the plurality of regulation holes 62 is preferably in a range of 2 mm to 6 mm, particularly 5 mm. Having regulation holes 62 with such a width allow for some tolerance in arranging the regulation holes 62 to overlap with the gas distribution holes 61. Preferably, each regulation holes 62 has the same width. Further, a distance between the two outermost regulation holes 62 among the plurality of regulation holes 62 may be in a range of 20 cm to 30 cm. According to one particular example, distance between the two outermost regulation holes 62 is about 24 cm.

Hence, having one inner tube 52 arranged at each end portion of the outer tube 51 allow for regulating a width of a gas curtain distributed by the gas distribution device 50 with 40 cm to 60 cm depending on the distance between the two outermost regulation holes 62 of the inner tubes 52. This since by an increased rotation of the inner tubes 52 with respect to the outer tube 51 more and more of the gas distribution holes 61 will be closed due to the difference in elongation of the regulation holes 62. Hence, by rotating the one or two inner tubes 52 with respect to the outer tube 51 opening/closing of gas distribution holes 61 may be controlled. In a first extreme, the plurality of regulation holes 62 will register with all of the set of gas distribution holes 61 with which the plurality of regulation holes 62 overlap along the longitudinal direction. In a second extreme, the inner tube 52 has been rotated so that none of the plurality of regulation holes 62 will register with any of the set of gas distribution holes 61. In between these extremes a subset of the plurality of regulation holes 62 will register with a subset of the set of gas distribution holes 61. Further, starting at the first extreme and slightly rotating the inner tube 51 with respect to the outer tube 52 the outermost gas distribution hole 61 will be closed, by a continued rotation of the inner tube 52 the penultimate gas distribution hole 61 will be closed as so forth. Accordingly, by rotating the inner tube 52 in relation to the outer tube 51 a width of a gas curtain to be provided by the gas distribution device 50 may be controlled. This allow for controlling the distribution of gas, e.g. gas comprising ozone, such that the width of the gas curtain provided by the gas distribution device may correspond to a width of the laminated packaging material currently being produced by the lamination system 100.

Additionally, variations to the disclosed variants can be understood and effected by the skilled person in practicing the claimed invention, from a study of the drawings, the disclosure, and the appended claims.

## Claims

1. A lamination system (100) configured to produce a laminated packaging material, the lamination system (100) comprising:
an impression roller (10) and a counter roller (110) together forming a press nip (120); and
an extruder (130),
wherein the lamination system (100) is configured to feed a web (22) of core material layer into the press nip (120), and
wherein the extruder (130) is configured to provide a film (24) of thermoplastic onto the web (22) of the core material layer,
the lamination system (100) further comprising a gas distribution device (50) configured to distribute a flow of gas onto a surface of the film (24) before the film (24) enters the press nip (120), the gas distribution device (50) comprising:
an outer tube (51) having a longitudinal extension parallel with a rotational axis of the impression roller (10) and the counter roller (110), the outer tube (51) having a plurality of gas distribution holes (61) distributed along the longitudinal extension, and
an inner tube (52) being rotationally arranged within the outer tube (51) at a first end portion of the outer tube (51), the inner tube (52) comprising a plurality of regulation holes (62) distributed along the longitudinal extension, wherein each regulation hole (62) has a different elongation in a direction perpendicular to the longitudinal extension, wherein an elongation of the regulation holes (62) is increasing as seen from an outer end of the first end portion of the outer tube (51), and wherein the plurality of regulation holes (62) overlap with at least a subset of the plurality of gas distribution holes (61).

2. The lamination system according to claim 1, wherein the plurality of gas distribution holes (61) are evenly distributed along the longitudinal extension, wherein the plurality of regulation holes (62) are evenly distributed along the longitudinal extension, wherein the regulation holes (62) have a same inter-hole distance (d₂) along the longitudinal direction as an inter-hole distance (d₁) of the gas distribution holes (61).

3. The lamination system according to claim 1 or 2, wherein the plurality of gas distribution holes (61) are arranged along a straight line parallel with the longitudinal extension.

4. The lamination system according to any one of claims 1-3, wherein the plurality of regulation holes (62) are overlapping along a straight line parallel with the longitudinal extension.

5. The lamination system according to any one of claims 1-4, wherein the gas distribution device (50) further comprises a gas supply configured to supply gas in the form of air comprising 1-5 wt% of ozone, preferably 3 wt% of ozone, wherein the gas is supplied to the inner tube (52) for distribution out from the gas distribution holes (61) of the outer tube (51).

6. The lamination system according to any one of claims 1-5, wherein the inner tube (52) comprises a coating on an outer surface thereof facing an inner surface of the outer tube (51).

7. The lamination system according to any one of claims 1-6, wherein the gas distribution device further comprises a control circuity configured to control rotation of the inner tube.

8. The lamination system according to any one of claims 1-7, wherein a diameter of the plurality of gas distribution holes (61) is in a range of 0.5 mm to 1.0 mm, preferably in a range of 0.75 to 0.9 mm.

9. The lamination system according to any one of claims 1-8, wherein a width of the plurality of regulation holes (62) is in a range of 2 mm to 6 mm.

10. The lamination system according to any one of claims 2-9, wherein the inter-hole distance (d₁) of the plurality of gas distribution holes (61) is in a range of 10 and 20 mm.

11. The lamination system according to any one of claims 1-10, wherein a distance between the two outermost gas distribution holes (61) among the plurality of gas distribution holes (61) is in a range of 160 cm to 180 cm.

12. The lamination system according to any one of claims 1-11, wherein a distance between the two outermost regulation holes (62) among the plurality of regulation holes (62) is in a range of 20 cm to 30 cm.

13. The lamination system according to any one of claims 1-12, wherein the gas distribution device comprises a further inner tube (52) being rotationally arranged within the outer tube (51) at a second end portion of the outer tube (51), the further inner tube (52) comprises a plurality of regulation holes (62) distributed along the longitudinal extension, wherein each regulation hole (62) has a different elongation in a direction perpendicular to the longitudinal extension, wherein an elongation of the regulation holes (62) is increasing as seen from an outer end of the second end portion of the outer tube (51), and wherein the plurality of regulation holes (62) overlap with at least a subset of the plurality of gas distribution holes (61).

14. The lamination system according to claim 13, wherein the further inner tube (52) comprises one or more of the features as defined in any one of claims 2, 4-7, 9, 10, 12.

15. A gas distribution device (50) comprising:
an outer tube (51) having a longitudinal extension and having a plurality of gas distribution holes (61) distributed along the longitudinal extension, and
an inner tube (52) being rotationally arranged within the outer tube (51) at a first end portion of the outer tube (51), the inner tube (52) comprising a plurality of regulation holes (62) distributed along the longitudinal extension, wherein each regulation hole (62) has a different elongation in a direction perpendicular to the longitudinal extension, wherein an elongation of the regulation holes (62) is increasing as seen from an outer end of the first end portion of the outer tube (51), and wherein the plurality of regulation holes (62) overlap with at least a subset of the plurality of gas distribution holes (61).
